# FASCICULE DE BREVET EUROPEEN

(11) **EP 2 239 932 B1**
(45) Date de publication et mention de la délivrance du brevet: **27.12.2017**
(21) Numéro de dépôt: 10157220.4
(22) Date de dépôt: 22.03.2010
(51) Int. Cl.: H04M 11/02

(54) **PROCÉDÉ D'INTERPHONIE, SUPPORT D'ENREGISTREMENT ET PORTIER POUR CE PROCÉDÉ**
SPRECHANLAGENVERFAHREN, AUFZEICHNUNGSTRÄGER UND ELEKTRONISCHES TÜRSCHLOSS FÜR DIESES VERFAHREN
INTERPHONE METHOD, RECORDING MEDIUM AND INTERPHONE FOR SAID METHOD

(30) Priorité: 06.04.2009 FR 0952236
(43) Date de publication de la demande: 13.10.2010
(73) Titulaire: Cogelec, 85290 Mortagne-sur-Sèvre (FR)
(72) Inventeur: Marchal, Norbert, 49300, Cholet (FR)
(74) Mandataire: Colombo, Michel

(56) Documents cités:
- GB-A- 2 285 365
- US-A1- 2008 117 299

## Description

L'invention concerne un procédé d'interphonie pour une résidence ainsi qu'un support d'enregistrement d'informations et un portier électrique pour la mise en oeuvre de ce procédé.

Un portier électrique est un appareil généralement situé à côté d'une porte d'entrée d'une résidence. Il permet à un visiteur d'appeler le combiné d'un résident, puis de communiquer avec lui si nécessaire. Le portier est également apte à déverrouiller la porte d'entrée pour autoriser le visiteur à entrer en réponse à une commande de déverrouillage émise par le combiné du résident appelé.

Le déposant connaît des résidences équipées :
- d'au moins un portier électrique comportant une interface homme-machine permettant à un visiteur de sélectionner l'un quelconque des résidents de la résidence et de communiquer avec le résident sélectionné par visioconférence, et
- d'un émetteur/récepteur relié à un réseau public de télécommunication, cet émetteur/récepteur étant apte à appeler un combiné du résident sélectionné et à établir la visioconférence par l'intermédiaire du reseau public.

De l'état de la technique est également divulgué dans US2008/117299 et GB2285365. Ici, par visioconférence on désigne une communication bidirectionnelle entre le visiteur et le résident lors de laquelle :
- les images du visiteur en train de parler ainsi que ses paroles sont restituées sur le combiné du résident, et
- au moins les paroles du résident qui parle dans son combiné sont restituées par le portier électrique.

Il n'est pas nécessaire que les images du résident en train de parier soient restituées sur un écran du portier électrique pour que cette communication soit qualifiée de visioconférence. Toutefois, cette dernière option peut être prévue.

Les réseaux publics de télécommunication sont bien connus. Il s'agit de réseau grande distance reliant un très grand nombre de terminaux d'abonnés. Ces abonnés ne sont pas exclusivement des résidents de la résidence. Ces terminaux peuvent être des téléphones fixes ou mobiles mais également des ordinateurs, PDA (Personnal Digital Assistant), ...etc. A cet effet, ces réseaux sont équipés de nombreux routeurs et organes de commutation pour être capable de connecter n'importe quel de ces terminaux d'abonné à un autre terminal d'abonné.

Dans les résidences, le procédé d'interphonie comporte, en réponse à la sélection, par un visiteur, de l'un quelconque des résidents de la résidence à l'aide de l'interface homme-machine :
- l'appel du combiné du résident sélectionné par l'intermédiaire du réseau public.

Pour ces résidences, la communication entre le portier électrique et les combinés des résidents s'établie par l'intermédiaire du réseau public de télécommunication.

L'utilisation d'un réseau public simplifie l'installation du matériel nécessaire à la mise en oeuvre du procédé. En effet, l'émetteur/récepteur n'a besoin d'être raccordé qu'au réseau public de télécommunication. Ainsi, il n'est pas nécessaire de le relier aux combinés des résidents par des liaisons exclusivement dédiées à l'interphonie. Il n'est pas non plus nécessaire de placer l'émetteur/récepteur en coupure de flux sur la boucle locale des combinés des résidents. L'installation d'un émetteur/récepteur en coupure de flux nécessite la coupure de la boucle locale lorsqu'il est installé ce qui implique d'avoir, au préalable, l'autorisation de l'opérateur du réseau public. De plus, pendant la durée de cette installation, les résidents ne peuvent pas recevoir des appels téléphoniques. On rappelle que l'installation en « coupure de flux » est la méthode qui consiste à raccorder en alternance la boucle locale du résident soit à l'émetteur/récepteur du portier soit directement au réseau public.

De plus, il n'est pas nécessaire d'équiper les appartements des résidents avec des combinés spécifiquement dédiés à l'interphonie. En effet, ce sont les combinés téléphoniques usuels des résidents qui sont utilisés. Par « usuel », on indique ici que ces combinés permettent également de passer une communication vers tout autre appareil de communication raccordé au même réseau public, tel qu'un autre combiné.

La visioconférence permet de faciliter l'identification du visiteur tout en conservant la simplicité d'installation liée à l'utilisation d'une liaison téléphonique et d'un réseau public de télécommunication.

Dans les réseaux publics connus de télécommunication, il est possible de transmettre des images vers un combiné appelé, uniquement à partir du moment où celui-ci a pris la ligne. Ensuite, dès que le combiné a pris la ligne, des images et du son sont échangés dans les deux sens pour permettre la communication par visioconférence entre le combiné appelant et le combiné appelé.

Ce comportement n'est pas adapté au cas où le combiné appelant est un portier électrique. En effet, il est souhaitable qu'un résident puisse observer le visiteur grâce aux images filmées puis, seulement après et s'il le souhaite, entamer une communication par visioconférence avec ce visiteur. Dans le cas où il ne souhaite pas parler avec le visiteur filmé, il doit pouvoir raccrocher sans que le visiteur ait pu détecter la présence du résident.

Or, avec les systèmes d'interphonie actuels, il doit prendre la ligne pour recevoir les images. Cette prise de ligne se traduit immédiatement par la mise en relation par visioconférence avec le visiteur. Ainsi, le visiteur peut entendre le résident et donc être informé que le résident a pris la ligne. Il est alors plus difficile pour le résident de raccrocher sans communiquer avec le visiteur.

L'invention vise à remédier à cet inconvénient.

Elle a donc pour objet un procédé d'interphonie conforme à la revendication 1 ou 2.

Dans le procédé ci-dessus, la prise de ligne par le résident est masquée tant que celui-ci n'a pas décidé d'activer la visioconférence. Ainsi, si le résident ne souhaite pas communiquer avec le visiteur filmé, alors qu'il a pris la ligne, il peut toujours raccrocher sans activer la visioconférence. Dans ce cas, le visiteur n'est pas informé que le résident sélectionné a pris la ligne puis a ensuite raccroché. Le visiteur n'est donc pas informé de la présence du résident.

Les modes de réalisation de ce procédé peuvent comporter une ou plusieurs des caractéristiques conformes aux revendications dépendantes.

Les caractéristiques énumérées ci-dessus peuvent être mises en oeuvre indépendamment les unes des autres et, en particulier, indépendamment des caractéristiques nécessaires pour empêcher que le visiteur puisse détecter la présence du résident même si celui-ci a pris la ligne.

Les modes de réalisation du procédé présentent en outre les avantages suivants :
- la transmission d'un message de présentation du portier électrique permet de savoir quel est le portier électrique qui appelle et/ou quelle est la touche utilisée pour déverrouiller la porte d'entrée sans que ces informations aient été au préalable enregistrées dans le combiné :
- la transmission d'un accusé d'exécution de la commande de déverrouillage permet au résident de vérifier que sa commande de déverrouillage a bien été prise en compte ;
- la transcription du message audio et/ou visuel acquis en fonction du résident sélectionné permet d'utiliser des combinés incompatibles entre eux mais susceptibles d'être appelés à partir du même émetteur/récepteur de la résidence;
- la transcription du message sonore dans un format spécialement adapté pour le combiné d'un résident malentendant facilite l'utilisation du procédé d'interphonie pour les malentendants ;
- l'acquisition en absence de communication d'un message alphanumérique et/ou sonore produit par un visiteur puis sa restitution ultérieure permet au visiteur de laisser un message à destination du résident en cas d'absence de ce résident ;
- la proposition de restitution du message enregistré en réponse au passage de la clé du résident à proximité de la centrale d'accès permet simplement d'informer ce résident de l'existence d'un message enregistré qui lui est destiné.

L'invention a également pour objet un support d'enregistrement d'informations comportant des instructions pour l'exécution du procédé d'interphonie ci-dessus, lorsque ces instructions sont exécutées par un calculateur électronique.

L'invention a également pour objet un portier électrique d'une résidence conforme à la revendication 11 ou 12.

Les modes de réalisations de ce portier électrique peuvent comporter la caractéristique suivante :
▪ l'émetteur/récepteur est un émetteur/récepteur UMTS (Universal Mobile Télécommunication System).

L'invention sera mieux comprise à la lecture de la description qui va suivre, donnée uniquement à titre d'exemple non limitatif et faite en se référant aux dessins sur lesquels :
- la figure 1 est une illustration schématique de l'architecture d'un système d'interphonie,
- la figure 2 est une illustration schématique d'un portier électrique utilisé dans le système de la figure 1,
- la figure 3 est une illustration schématique d'une caméra motorisée utilisée dans le portier électrique de la figure 2,
- la figure 4 est un organigramme d'un procédé d'interphonie mis en oeuvre dans le système de la figure 1, et
- la figure 5 est une illustration schématique d'une autre architecture possible d'un système d'interphonie.

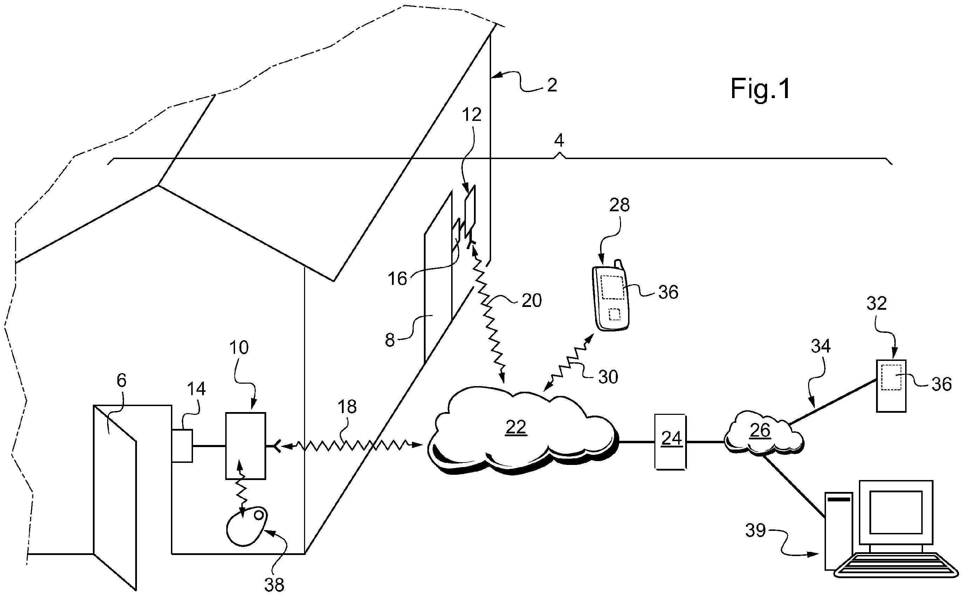

La figure 1 représente une résidence 2 équipée d'un système d'interphonie 4. Par exemple, la résidence 2 est un habitat collectif tel qu'un immeuble ou un groupe d'immeubles.

Ici, la résidence 2 est équipée de plusieurs portes d'entrée 6, 8.

Le système 4 comporte pour chaque porte d'entrée un portier électrique 10, 12.

Chaque portier électrique 10, 12 permet d'appeler un résident de la résidence 2, de communiquer avec celui-ci et de commander le déverrouillage de la porte associée avec ce portier électrique et, en alternance, d'interdire ce déverrouillage. A cet effet, chaque portier 10, 12 est raccordé à une serrure électrique respective 14, 16. Par exemple, les serrures électriques sont des gâches électriques.

Ici, chaque portier 10, 12 est raccordé au combiné des résidents par l'intermédiaire, respectivement, de liaisons téléphoniques sans fil 18, 20 et d'un réseau public 22 de télécommunication sans fil. Par exemple, le réseau 22 est un réseau UMTS (Universal Mobile Telecommunication System).

Ce réseau 22 peut être lui-même raccordé par l'intermédiaire d'une passerelle 24 à d'autres réseaux publics de télécommunication tels qu'un réseau filaire 26. Par exemple, le réseau 26 est un réseau à commutation de circuits (par exemple un réseau RTC (Réseau Téléphonique Public Commuté)) ou un réseau à commutation de paquets (par exemple Internet).

Les combinés du système 4 sont raccordés à l'un de ces réseaux publics. Pour simplifier la figure 1 :
- seul un combiné 28 directement raccordé au réseau 22 par l'intermédiaire d'une liaison téléphonique 30 sans fil a été représenté, et
- seul un combiné 32 directement raccordé par l'intermédiaire d'une liaison filaire 34 au réseau 26 a été représenté.

Ces combinés sont des combinés téléphoniques standards aptes a établir une communication téléphonique avec n'importe quel autre combiné raccordé au même réseau public et non pas seulement avec les portiers 10, 12. Par exemple, le combiné 28 est un téléphone mobile et le combiné 32 est un téléphone fixe.

Chacun de ces combinés est apte à recevoir des appels en provenance des portiers électriques 10 et 12 et à établir une communication par visioconférence entre un visiteur présent devant ces portiers et le résident titulaire de ce combiné.

A cet effet, chacun des combinés 28 et 32 est équipé d'une interface homme-machine 36 permettant l'établissement de cette communication par visioconférence. Par exemple, l'interface 36 comporte au moins un écran, un microphone, un haut-parleur et, éventuellement, une caméra.

De plus, chacun des combinés est apte à commander à distance le déverrouillage des portes de la résidence 2. A cet effet, l'interface homme-machine comprend des moyens pour acquérir une commande de déverrouillage. Par exemple, ces moyens sont réalisés à l'aide d'un clavier.

Pour simplifier la figure 1, le combiné 32 a été représenté comme étant situé à l'extérieur de la résidence 2. Toutefois dans la réalité, celui-ci sera situé à l'intérieur de la résidence 2 et typiquement à l'intérieur d'un appartement de la résidence 2.

Le combiné 28 est un combiné mobile, il peut donc être utilisé aussi bien à l'intérieur de la résidence 2 qu'à l'extérieur.

Le système 2 comporte également des clés d'accès permettant aux résidents de déverrouiller les portes d'entrée 6, 8 lorsqu'il présente leurs clés devant une centrale d'accès. Dans le mode de réalisation particulier décrit ici, les centrales d'accès sont incorporées dans les portiers électriques 10, 12. Ces clés contiennent des informations d'accès qui autorisent ou, au contraire, interdisent l'accès à la résidence 2. De préférence, les informations d'accès sont lues sans contact par les centrales d'accès par l'intermédiaire d'une liaison courte distance de transmission d'informations. Par « liaison courte distance », on désigne une liaison d'au plus dix mètres. Typiquement, il s'agit de clés à transpondeurs, c'est-à-dire de clés équipées d'un transpondeur. Généralement, un transpondeur est un circuit électronique alimenté à partir d'ondes électromagnétiques rayonnées par la centrale d'accès. Ainsi, ces clés ne comportent pas nécessairement une batterie d'alimentation. Pour simplifier la figure 1, seule une clé 38 à transpondeur a été représentée.

Le système 4 comporte également un poste 39 de configuration à distance des portiers 10 et 12. Ce poste 39 permet notamment de transmettre des instructions de mise à jour des paramètres programmables du portier électrique et de la centrale d'accès associée par la même liaison téléphonique que celle utilisée par ce portier pour communiquer par visioconférence avec les combinés des résidents. Ici, le poste 39 est représenté comme étant raccordé aux portiers 10, 12 par l'intermédiaire, successivement, du réseau 26, de la passerelle 24, du réseau 22 et des liaisons 18, 20.

Par exemple, les portiers 10 et 12 sont identiques et seul le portier 10 est décrit plus en détails.

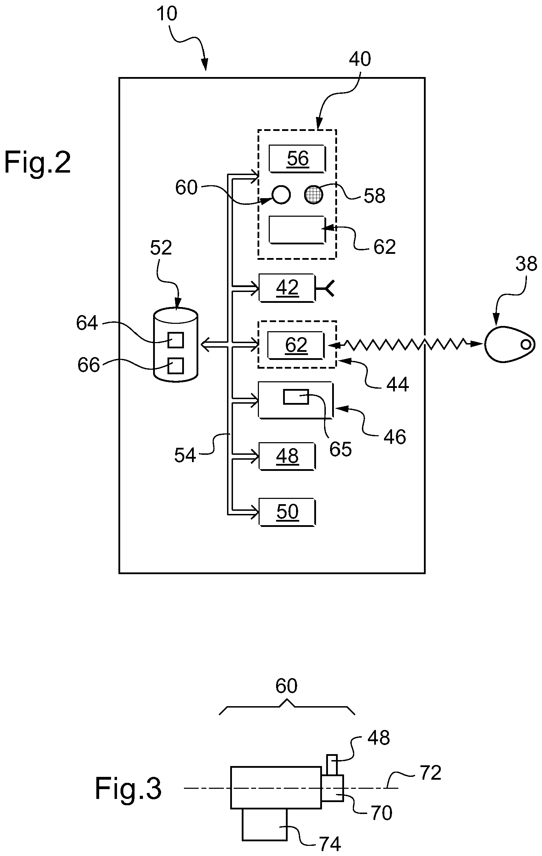

La figure 2 représente plus en détail un exemple de mode de réalisation du portier 10.

Le portier 10 comprend :
- une interface homme-machine 40,
- un émetteur/récepteur 42 apte à établir la liaison 18 avec le réseau 22,
- une centrale 44 d'accès propre à autoriser et, en alternance, à interdire l'accès à la résidence 2,
- un jeu 46 de modules de transcription aptes à convertir les images et les sons acquis par l'intermédiaire de l'interface 40 dans un format compatible avec leur restitution sur les combinés des résidents,
- un accéléromètre 48,
- une unité de commande 50 apte à commander les différents équipements du portier 10,
- une mémoire 52, et
- un bus local 54 de transmission d'informations pour raccorder les uns aux autres les différents éléments du portier 10.

L'interface 40 permet :
- une communication par visioconférence,
- la sélection de l'un quelconque des résidents de la résidence 2, et
- l'acquisition de caractères alphanumériques.

Par exemple, l'interface 40 est formée d'un écran 56, d'un microphone et d'un haut-parleur 58, d'une caméra motorisée 60 et d'un clavier 61.

La centrale d'accès 44 est équipée d'un lecteur 62 de clés à transpondeur. Plus précisément, cette centrale 44 est apte à lire les informations d'accès enregistrées dans une clé à transpondeur et à les comparer à des paramètres d'accès 64 pour autoriser et, en alternance, interdire le déverrouillage de la porte 6. Les paramètres 64 sont enregistrés dans la mémoire 52. Les paramètres 64 sont des paramètres programmables. Par exemple, les paramètres 64 forment une liste d'identifiants de clés autorisant l'accès à la résidence 2.

Le jeu 46 comprend plusieurs modules de transcription. Chaque module transcrit les images et les sons acquis par l'intermédiaire de l'interface 40 dans un format compatible avec leur présentation sur un combiné particulier. Les différents formats dans lesquels sont transcrits les images et les sons acquis par l'interface 40 sont typiquement incompatibles entre eux. Ainsi, un message transcrit dans un format particulier à destination d'un combiné particulier n'est pas restituable ni affichable sur un autre combiné. Par exemple, le jeu 46 comporte les modules suivants de transcription :
- un module de transcription dans un format lisible et présentable sur un téléphone mobile UMTS,
- un module de transcription dans un format compatible avec un téléphone fixe équipé de l'interface 36, et
- un module 65 de transcription dans un format compatible avec des combinés de malentendants.

Par exemple, le module 65 convertit le son en texte en mettant en oeuvre les techniques de la reconnaissance vocale. Ainsi, ce qui est prononcé par un visiteur, est présenté sous la forme d'un texte sur le combiné du malentendant.

De préférence, l'accéléromètre 48 est un accéléromètre capable de mesurer l'accélération dans trois directions orthogonales.

La mémoire 52, en plus des paramètres d'accès 64, comporte également des paramètres d'appel 66 associés à chaque résident. Ces paramètres d'appel 66 sont utilisés pour sélectionner le résident et lors de l'appel de ce résident par l'intermédiaire de la liaison 18. Par exemple, les paramètres d'appels associés à chaque résident sont :
- le nom du résident,
- le numéro de téléphone de son combiné.

De nombreux autres paramètres d'appel sont possibles. Par exemple, pour chaque résident, il est possible de préciser un second numéro de téléphone à composer si le premier numéro correspond à une ligne occupée ou ne répond pas. Ces paramètres d'appel sont des paramètres programmables.

L'unité 50 commande notamment le fonctionnement de chacun des éléments du portier 10 et gère également les mises à jour des différents paramètres programmables enregistrés dans la mémoire 52.

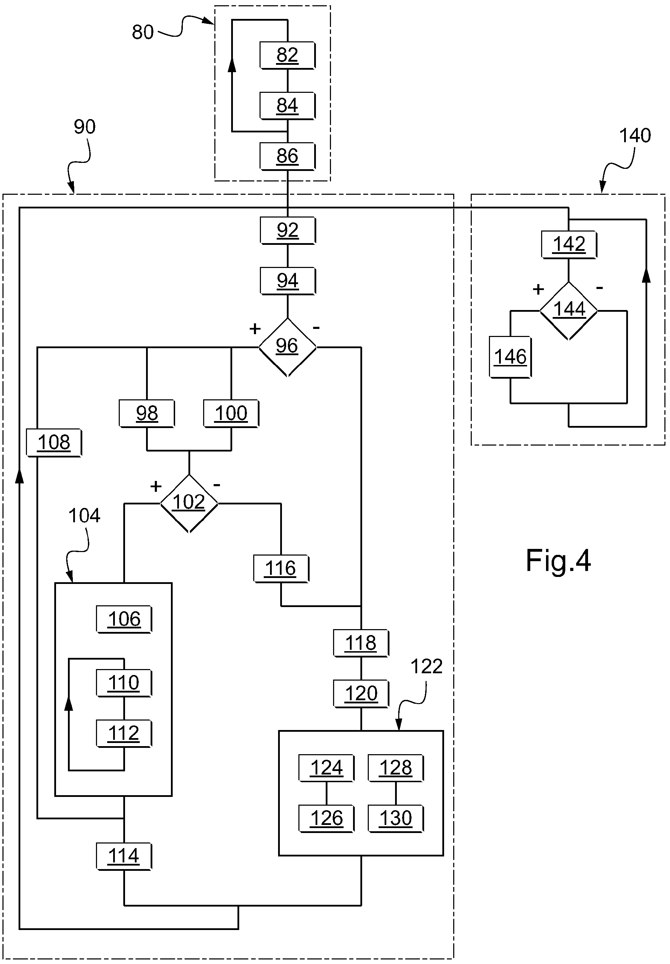

La plupart des éléments du portier 10 tels que l'unité de commande 50, les modules de transcription et la centrale 44 sont réalisés à partir de calculateurs électroniques programmables. A cet effet, le ou les calculateurs électroniques programmables sont raccordés à un support d'enregistrement d'informations tel que la mémoire 52. Ici, la mémoire 52 comporte les instructions et données nécessaires à l'exécution du procédé de la figure 4.

La figure 3 représente plus en détail la caméra motorisée 60. Cette caméra 60 est équipée d'un objectif 70 permettant de filmer dans une direction représentée par sa ligne de visée 72. Cet objectif 70 permet également de modifier la distance focale et donc de zoomer. La caméra 60 comprend un actionneur 74 commandable apte à déplacer la ligne de visée 72 par rapport à un châssis fixe du portier 10 en fonction de commandes de déplacement émises par un combiné. Par exemple, ce châssis est scellé sans aucun degré de liberté dans un mur de la résidence 2. L'actionneur 74 permet également de zoomer en réponse à des commandes transmises par le combiné appelé.

Ici, l'accéléromètre 48 est fixé sur l'une des parties mobiles de la caméra 60 déplaçables par l'actionneur 74. Par exemple, l'accéléromètre 48 est fixé sur l'objectif 70. De plus, la caméra 60 est fixée sans aucun degré de liberté à la face avant du portier 10 exposée au regard du visiteur. Ainsi, l'accéléromètre 48 est sensible au déplacement de la caméra 60 par rapport au châssis fixe du portier 10 mais également aux chocs que peut subir la face avant de ce portier.

Le fonctionnement du système 4 va maintenant être décrit plus en détail en regard du procédé d'interphonie de la figure 4.

On procède tout d'abord à une phase 80 d'installation du système 4. Lors de cette phase 80, les portiers 10, 12 sont scellés dans des murs de la résidence 2 à côté des portes d'entrée 6 et 8. Pendant l'installation de chaque portier, lors d'une étape 82, l'accéléromètre 48 mesure l'inclinaison du portier électrique 10 par rapport à l'horizontale et/ou la verticale. Ensuite, lors d'une étape 84, l'inclinaison mesurée est présentée à l'installateur par l'intermédiaire de l'interface 40. Par exemple, l'inclinaison est représentée graphiquement sur l'écran 56. Cela facilite le positionnement du portier par rapport à l'horizontale et/ou la verticale.

Ensuite, lors d'une étape 86, le portier 10 est configuré et mis à jour. Plus précisément, lors de cette étape 86, les différents paramètres programmables de ce portier sont enregistrés dans sa mémoire 52. Par exemple, c'est lors de cette étape que les paramètres 64 et 66 sont programmés. A cet effet, le poste 39 appelle le portier électrique par l'intermédiaire du réseau 22 et de la liaison 18. Le portier 10 relève, sans prendre la ligne, le numéro appelant. Ensuite, il le compare à un numéro préenregistré dans sa mémoire en usine. Si les numéros correspondent alors, en réponse, il établit une connexion avec le poste 39 par l'intermédiaire des réseaux 22 et 26 et de la passerelle 24. Dans le cas contraire, aucune connexion n'est établie avec le poste 39. Pour ce connecter au poste 39, le portier 10 utilise, par exemple, une adresse IP (Internet Protocol) préenregistrée en usine et correspondant à l'adresse IP fixe du poste 39. Une fois la connexion établie, le portier 10 transmet un identifiant au poste 39. Cet identifiant permet au poste 39 d'identifier le portier 10 parmi l'ensemble des portiers électriques susceptibles de le contacter. Si l'identifiant est reconnu, le poste 39 ouvre alors une session. Une session est l'exécution par le poste 39 d'une tâche de configuration d'un portier particulier qui s'est identifié au préalable. La session dure tant que la tâche de configuration s'exécute sur le poste 39. Ici, le poste 39 transmet au portier 10, lors de la même session, les paramètres 64 et 66. Ainsi, ces paramètres sont reçus quasiment en même temps par le portier 10, ce qui permet une mise à jour quasi-simultanée des paramètres permettant de contrôler l'accès à la résidence 2 et des paramètres permettant de contacter le résident. Ainsi, les inconvénients liés à un décalage temporel entre la mise à jour des paramètres nécessaires à la centrale d'accès 44 et les paramètres nécessaires à la sélection et à l'appel d'un résident ne se produisent pas. De plus, une seule opération d'identification de l'adresse de l'émetteur/récepteur 42 sur le réseau public est réalisée.

L'étape 86 est exécutée à chaque changement de résident ou modification concernant un résident habitant la résidence 2 et non pas uniquement lors de l'installation du portier 10.

Une fois le système 4 installé et configuré, on procède à une phase 90 d'exploitation de ce système.

Initialement, lors d'une étape 92, un visiteur se présente devant le portier 10 et sélectionne à l'aide de l'interface 40 l'un quelconque des résidents de la résidence 2.

En réponse à cette sélection, lors d'une étape 94, le portier 10 appelle, par l'intermédiaire de la liaison 18 et du réseau 22, le combiné du résident sélectionné. A cet effet, lors de l'étape 94, les paramètres d'appel associés au résident sélectionné sont utilisés.

Lors d'une étape 96, l'unité 50 vérifie si le combiné du résident appelé a pris la ligne. L'information selon laquelle le combiné du résident a pris la ligne est transmise au portier par l'intermédiaire du réseau 22 et de la liaison 18.

Dans l'affirmative, il est procédé à des étapes 98 et 100 exécutées en parallèle.

Lors de l'étape 98, un message de présentation du portier électrique est automatiquement transmis au combiné du résident et présenté au résident par l'intermédiaire de son combiné. Ce message de présentation indique que l'appel reçu provient d'un portier électrique. Avantageusement, ce message de présentation contient également un identifiant du portier électrique qui appelle et un identifiant d'une touche ou de plusieurs touches à enfoncer associées chacune à une explication du résultat que provoque l'enfoncement de cette touche. Typiquement, le message de présentation comprend, par exemple, au moins :
- un identifiant d'une touche qui, lorsqu'elle est enfoncée, active la visioconférence, et/ou
- un identifiant d'une touche qui, lorsqu'elle est enfoncée, déclenche le déverrouillage de la porte située à côté du portier électrique appelant.

Ce message de présentation est affiché sur le combiné du résident appelé.

En parallèle de l'étape 98, lors de l'étape 100, l'interface 40 est commandée pour inhiber la présentation au visiteur de toute information lui permettant de soupçonner que le résident appelé a pris la ligne. Par exemple, lors de l'étape 100, aucune image du résident n'est affichée par l'intermédiaire de l'écran 56. De plus, en même temps, le haut-parleur 58 est commandé pour générer les mêmes sons que ceux qu'il génère habituellement tant que le combiné du résident n'a pas pris la ligne. Ainsi, tant que l'étape 100 est exécutée, le visiteur ne peut pas soupçonner que le résident a pris la ligne. Par exemple, lors de l'étape 100, l'interface 100 indique seulement par un message que l'appel est en cours sans autre précision.

Toutefois, lors de l'étape 100, au moins les images filmées par la caméra 60 sont transmises par l'intermédiaire de la liaison 18 et du réseau 22 jusqu'au combiné du résident sélectionné et affichées par ce combiné.

Ainsi, le résident peut voir quel est le visiteur qui l'appelle sans être vu.

Ensuite, lors d'une étape 102, le combiné vérifie si une touche d'activation de la communication par visioconférence a été enfoncée par le résident. Dans l'affirmative, il est mis fin à l'étape 100 et une étape 104 de communication par visioconférence entre le résident et le visiteur est déclenchée.

Lors de cette étape 104, et plus précisément lors d'une opération 106, l'unité 50 sélectionne le module de transcription à utiliser en fonction du résident sélectionné lors de l'étape 92. Ensuite, les images et les sons acquis par l'intermédiaire de l'interface 40 sont transcrits dans un format compatible avec le combiné du résident sélectionné. Ensuite, les images et les sons transcrits sont transmis au combiné sélectionné par l'intermédiaire de la liaison 18 et du réseau 22. Le module de transcription utilisé à cet effet, est choisi en fonction du résident sélectionné. Par exemple, si le résident sélectionné est malentendant, le module 65 de transcription est sélectionné. Ce module 65 convertit alors les sons en texte puis les images et le texte transcrit sont envoyés au résident.

Après avoir conversé avec le visiteur, le résident, lors d'une opération 110, enfonce une touche qui provoque la transmission d'une commande de déverrouillage vers le portier 10. Cette commande de déverrouillage, lors d'une opération 112, est exécutée par le portier 10. Par exemple, le portier 10 commande la serrure électrique 14 pour déverrouiller la porte 6. Ensuite, toujours lors de l'opération 112, le portier transmet au combiné par l'intermédiaire de la liaison 18 et du réseau 22 un accusé d'exécution de la commande de déverrouillage. Cet accusé d'exécution est présenté au résident par l'intermédiaire de l'interface 36, ce qui lui permet de vérifier que sa commande de déverrouillage a bien été prise en compte.

Après avoir conversé avec le visiteur puis déverrouillé ou non la porte 6, lors d'une étape 114, le résident raccroche.

Si après avoir visionné les images filmées par la caméra 60, le résident ne souhaite pas converser avec le visiteur, il n'envoie pas de commande d'activation de la visioconférence et, lors d'une étape 116, raccroche sans être vu.

En parallèle des étapes 98 à 104, dès que le résident prend la ligne, lors d'une étape 108, il peut envoyer des commandes de déplacement et de zoom de la caméra 60. Par exemple, pour envoyer ces commandes, le résident enfonce les touches appropriées de son combiné.

En réponse à ces commandes de déplacement ou de zoom, l'actionneur 74 de la caméra 60 est commandé pour déplacer l'objectif ou pour zoomer à l'aide de l'objectif 70. Ainsi, le résident peut lui-même contrôler l'image filmée par la caméra 60 et donc l'adapter à chaque situation et à chaque visiteur. Ces déplacements de la caméra 60 sont mesurés par l'accéléromètre 48. L'unité 50 de commande utilise ces mesures pour contrôler les déplacements de la caméra 60. Par exemple, l'unité 50 asservit la position de la caméra 60 sur une position de référence indiquée par les commandes de déplacement reçues.

Lorsque le combiné du résident n'a pas pris la ligne ou après que le résident ait raccroché sans avoir activé la visioconférence, il est procédé à une étape 118 lors de laquelle il est proposé au visiteur, par l'intermédiaire de l'interface 40, d'enregistrer un message à destination du résident présumé absent. Typiquement, il s'agit d'un message textuel, sonore ou audiovisuel. Si le visiteur accepte d'enregistrer un tel message, lors d'une étape 120, il produit un message qui est acquis par le portier par l'intermédiaire de l'interface 40 puis enregistré avec un identifiant du résident sélectionné lors de l'étape 92. Pour saisir un message textuel, le visiteur utilise le clavier 61.

Ensuite, lors d'une étape 122, le portier électrique propose au résident de consulter et d'écouter les messages enregistrés et qui lui sont destinés.

Pour cela, lors d'une opération 124, le portier transmet au combiné du résident par l'intermédiaire de la liaison 18 et du réseau 22 un message lui signalant l'existence des messages laissés par le visiteur. Par exemple, ce message prend la forme d'un SMS (Short Messaging Service) ou d'un MMS (Multimedia Messaging Service). Alternativement, le portier peut directement envoyé, en tant que message de signalement, le message enregistré lui-même. Ce message est alors transmis sous la forme d'un message SMS ou MMS, par exemple. Dans ce cas, un signal du combiné indique au résident qu'il a reçu un nouveau message.

Lors d'une opération 126, en réponse à ce message, le résident peut consulter le message enregistré par l'intermédiaire de son combiné.

A titre d'illustration, lors d'une opération 128, le portier 10 propose automatiquement de consulter les messages enregistrés pour un résident donné par l'intermédiaire de l'interface 40 dès que la clé de ce résident passe à proximité du lecteur 62. A cet effet, le résident est identifié à partir des informations contenues dans sa clé à transpondeur. Lors d'une opération 130, suite à cette proposition, le résident peut accepter ou refuser de consulter les messages enregistrés par l'intermédiaire de l'interface 40.

A l'issue de l'étape 114 ou de l'étape 122, le procédé retourne à l'étape 92.

En parallèle de la phase d'exploitation, une phase de détection de vandalisme 140 est exécutée en permanence. Au début de cette phase, lors d'une étape 142, l'accéléromètre 48 mesure l'accélération subie par la face avant du portier 10.

Lors d'une étape 144, l'accélération mesurée est comparée à un seuil prédéterminé S₁. Si ce seuil prédéterminé est franchi, on procède à une étape 146 lors de laquelle un appel par l'intermédiaire de la liaison 18 et du réseau 22 vers un gestionnaire du système 4 est automatiquement déclenché. En parallèle ou en tant qu'alternative, lors de l'étape 146, les images filmées par la caméra 60 sont enregistrées.

En effet, une tentative de vandalisme du portier électrique se traduit généralement par des coups portés sur la face avant de ce portier et donc par des accélérations et décélérations importantes subies par la face avant. Dès lors, déclencher l'enregistrement des images filmées par la caméra 60 à ce moment-là peut être utile pour identifier les personnes à l'origine de cette tentative de vandalisme.

A l'issue de l'étape 146 ou dans le cas où les accélérations mesurées ne dépassent pas le seuil prédéterminé, on retourne à l'étape 142.

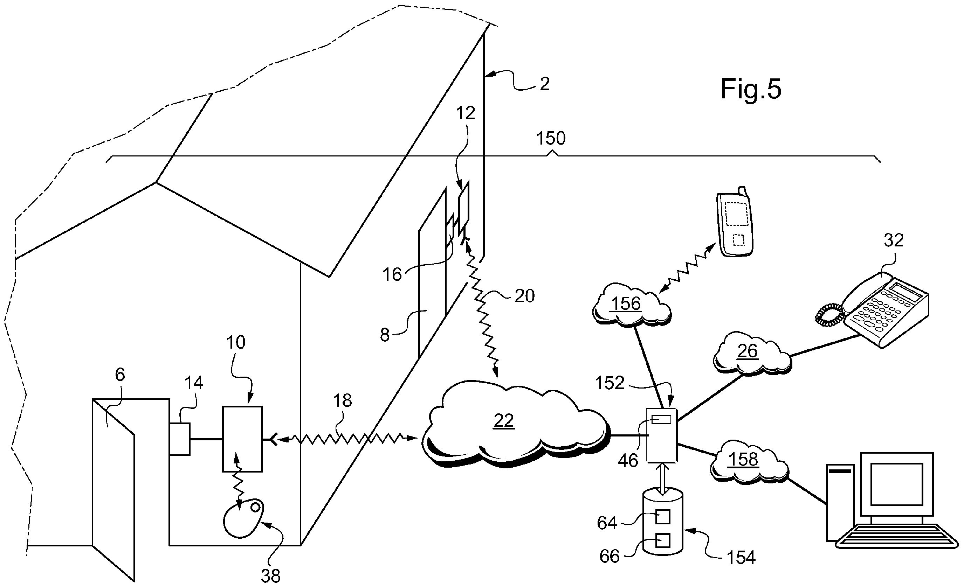

La figure 5 représente un système 150 d'interphonie. Ce système 150 est identique au système 4 à l'exception du fait que plusieurs fonctionnalités exécutées dans les portiers électriques sont déportées et implémentées dans une passerelle 152 reliée aux portiers électriques par l'intermédiaire du réseau 22 et des liaisons 18 et 20. En particulier, les fonctionnalités telles que la transcription des images et des sons acquis par les portiers électriques sont implémentées dans la passerelle 152. La passerelle 152 est raccordée à une mémoire 154. Cette mémoire 154 peut contenir une partie ou la totalité des paramètres d'appel et/ou d'accès qui, dans le système 2, étaient enregistrés dans le portier électrique.

Grâce à ses modules de transcription, la passerelle 152 raccorde le réseau 22 simultanément à différents types de réseaux tels que le réseau 26 mais également un autre réseau 156 de téléphonie 26 et à un réseau à commutation de paquets tel qu'Internet 158. Dès lors, cette passerelle 152 qui incorpore le jeu 46 de modules de transcription permet de communiquer avec un grand nombre de combinés technologiquement différents et incompatibles entre eux tels que des téléphones mobiles, des téléphones fixes ou des ordinateurs équipés d'une interface permettant de communiquer par visioconférence.

Le fonctionnement du système 150 est similaire au fonctionnement du système 4 à l'exception du fait que lorsqu'un visiteur a sélectionné un résident, le portier électrique se contente de transmettre un identifiant du résident sélectionné à la passerelle 152 et c'est la passerelle 152 qui utilise les paramètres d'appel 66 enregistrés dans sa mémoire 154 pour établir la communication entre le portier 10 et le combiné du résident sélectionné. De façon similaire, lorsqu'une clé 38 est présentée devant le lecteur de transpondeur du portier 10, les informations contenues dans cette clé 38 peuvent être transmises à la passerelle 152 qui les compare aux paramètres d'accès 64 et qui, en réponse, envoie une commande de déverrouillage ou non au portier 10. Le fait de déporter les fonctions précédemment implémentées dans le portier électrique vers une passerelle commune permet de simplifier chacun des portiers électriques.

Dans ce mode de réalisation, la plupart des paramètres programmables nécessaires au fonctionnement des portiers électriques peuvent être mis à jour en établissant simplement une connexion entre le poste de configuration et la passerelle 152 sans qu'il soit nécessaire de communiquer directement avec les portiers électriques.

De nombreux autres modes de réalisation sont possibles. Par exemple, la transmission du message de présentation du portier électrique est implémentée, en variante, dans la passerelle 152.

Les claviers peuvent être remplacés par des modules de reconnaissance vocale ou tout autre moyen permettant de sélectionner un résident et, du côté du combiné, permettant de déclencher l'envoi de commandes de déverrouillage, des commandes d'activation de la visioconférence et des autres commandes décrites précédemment.

La donnée qui permet d'identifier que l'appel reçu par un combiné provient d'un portier électrique peut être insérée dans le message de présentation ou non. Par exemple, cette donnée peut être transmise avant même l'affichage du message de présentation sur le combiné du résident. Par exemple, pour identifier que l'appel provient d'un portier électrique, une sonnerie particulière est transmise au combiné. Ainsi, avant même que le combiné ne prenne la ligne, le résident peut identifier que l'appel provient d'un portier électrique sans que le résident ait eu à enregistrer au préalable le numéro de téléphone du portier dans son combiné.

La fonctionnalité décrite ici pour masquer aux yeux du visiteur que le résident a pris la ligne peut être implémentée dans une passerelle telle que la passerelle 152.

Ici, le portier électrique a été décrit dans le cas particulier où il intègre la centrale d'accès. En variante, les fonctionnalités du portier électrique et de la centrale d'accès sont mécaniquement séparées les unes des autres. Par exemple, les équipements uniquement exploités par le portier électrique et par la centrale d'accès sont logés dans des boîtiers distincts et espacés l'un de l'autre.

Il n'est pas nécessaire que les paramètres d'accès et d'appel soient enregistrés dans une même mémoire.

La liaison téléphonique qui raccorde le portier électrique au réseau public peut être une liaison filaire.

L'émetteur/récepteur peut être implémenté à l'intérieur du portier électrique ou dans la centrale d'accès si celle-ci est mécaniquement indépendante du portier électrique ou encore dans un boîtier mécaniquement indépendant du portier électrique et de la centrale d'accès.

D'autres réseaux publics de télécommunication sans fil peuvent être utilisés. Par exemple, le réseau UMTS peut être remplacé par un réseau GSM (Gobai System for Mobile communication).

Le poste 39 de configuration peut être raccordé directement au réseau 22 par une liaison sans fil, sans passer par l'intermédiaire d'un autre réseau public comme le réseau 26.

En variante, le portier se connecte au poste 39 systématiquement en réponse à un appel téléphonique sans comparer le numéro appelant à un numéro préenregistré.

## Revendications

1. Procédé d'interphonie d'une résidence équipée :
- d'au moins un portier électrique comportant une interface homme-machine permettant à un visiteur de sélectionner l'un quelconque des résidents de la résidence et de communiquer avec le résident sélectionné par visioconférence, et
- d'un émetteur/récepteur relié à un réseau public de télécommunication, cet émetteur/récepteur étant apte à appeler un combiné du résident sélectionné et à établir la visioconférence par l'intermédiaire du réseau public,
ce procédé comportant, en réponse à la sélection, par un visiteur, de l'un quelconque des résidents de la résidence à l'aide de l'interface homme-machine :
- l'appel (94) du combiné du résident sélectionné par l'intermédiaire du réseau public,
**caractérisé en ce que** :
• le procédé comprend l'étape suivante : tant que le combiné n'a pas pris la ligne, l'interface homme-machine génère des sons, et
• le procédé comprend les étapes suivantes en réponse à la prise de ligne par le combiné du résident, :
- l'interface homme-machine génère les mêmes sons que ceux habituellement générés tant que le combiné n'a pas pris la ligne et inhibe (100) la présentation par l'intermédiaire de l'interface homme-machine de toute information permettant au visiteur de savoir que le résident sélectionné a pris la ligne et, en même temps,
- ledit au moins un portier électrique et l'émetteur/récepteur transmettent, par l'intermédiaire du réseau public, des images du visiteur ayant sélectionné ce résident et le combiné du résident affiche ces images, puis
• le procédé comprend les étapes suivantes en réponse à une commande d'activation de la visioconférence, transmise par le combiné du résident :
- l'interface homme-machine arrête (104) d'inhiber la présentation par l'intermédiaire de l'interface homme-machine de toute information permettant au visiteur de savoir que le résident sélectionné a pris la ligne, et
- l'émetteur/récepteur établit la visioconférence entre le visiteur et le résident par l'intermédiaire du réseau public.

2. Procédé d'interphonie d'une résidence équipée :
- d'au moins un portier électrique comportant une interface homme-machine permettant à un visiteur de sélectionner l'un quelconque des résidents de la résidence et de communiquer avec le résident sélectionné par visioconférence, et
- d'un émetteur/récepteur relié à un réseau public de télécommunication, cet émetteur/récepteur étant apte à appeler un combiné du résident sélectionné et à établir la visioconférence par l'intermédiaire du réseau public,
ce procédé comportant, en réponse à la sélection, par un visiteur, de l'un quelconque des résidents de la résidence à l'aide de l'interface homme-machine :
- l'appel (94) du combiné du résident sélectionné par l'intermédiaire du réseau public,
**caractérisé en ce que** :
• le procédé comprend l'étape suivante : tant que le combiné n'a pas pris la ligne, l'interface homme-machine génère des images, et
• le procédé comprend les étapes suivantes en réponse à la prise de ligne par le combiné du résident :
- l'interface homme-machine génère les mêmes images que celles habituellement générées tant que le combiné n'a pas pris la ligne et inhibe (100) la présentation par l'intermédiaire de l'interface homme-machine de toute information permettant au visiteur de savoir que le résident sélectionné a pris la ligne et, en même temps,
- ledit au moins un portier électrique et l'émetteur/récepteur transmettent, par l'intermédiaire du réseau public, des images du visiteur ayant sélectionné ce résident et le combiné du résident affiche ces images, puis
• le procédé comprend les étapes suivantes en réponse à une commande d'activation de la visioconférence, transmise par le combiné du résident :
- l'interface homme-machine arrête (104) d'inhiber la présentation par l'intermédiaire de l'interface homme-machine de toute information permettant au visiteur de savoir que le résident sélectionné a pris la ligne, et
- l'émetteur/récepteur établit la visioconférence entre le visiteur et le résident par l'intermédiaire du réseau public.

3. Procédé selon la revendication 1 ou 2, dans lequel le procédé comprend :
- la transmission (98) d'un message de présentation du portier électrique appelant, ce message comprenant un identifiant du portier électrique appelant propre à identifier ce portier parmi plusieurs portiers électriques susceptibles d'appeler le même combiné du résident et/ou au moins un identifiant d'une touche du combiné qui, lorsqu'elle est activée, déclenche le déverrouillage d'une porte d'entrée de la résidence associée à cette touche, et
- la présentation (98) par le combiné du résident sélectionné de ce message de présentation de manière à permettre au résident d'identifier le portier électrique qui appelle et/ou la touche de son combiné à activer pour déclencher le déverrouillage de la porte d'entrée associée à cette touche.

4. Procédé selon l'une quelconque des revendications précédentes, dans lequel le procédé comprend :
- la transmission (110), par le combiné du résident sélectionné et via le réseau public, d'une commande de déverrouillage d'une porte d'entrée de la résidence, et
- en réponse à l'exécution de la commande de déverrouillage par le portier électrique, la transmission (112) au combiné du résident sélectionné et la présentation par ce combiné d'un accusé d'exécution de la commande de déverrouillage.

5. Procédé selon l'une quelconque des revendications précédentes, dans lequel le procédé comprend :
- l'acquisition d'un message audio et/ou visuel d'un visiteur par le portier électrique,
- la sélection (106), en fonction du résident sélectionné par l'intermédiaire de l'interface homme-machine, d'un format spécialement adapté pour le combiné du résident sélectionné, ce format n'étant pas lisible par d'autres combinés susceptibles d'être appelés par le même portier électrique, et
- la transcription (106) du message audio et/ou visuel acquis dans le format sélectionné et la transmission du message transcrit vers le combiné sélectionné.

6. Procédé selon la revendication 5, dans lequel le procédé comprend la transcription (106) du message audio et/ou visuel acquis dans un format spécialement adapté pour le combiné d'un résident malentendant, ce format différant du format qui aurait été sélectionné pour le même message si un résident bien entendant avait été sélectionné.

7. Procédé selon l'une quelconque des revendications précédentes, dans lequel le procédé comprend :
- l'acquisition (120), en absence de communication avec le combiné du résident sélectionné, d'un message alphanumérique et/ou audio produit par un visiteur,
- l'enregistrement (120) de ce message acquis associé à un identifiant du résident sélectionné par ce visiteur à l'aide de l'interface homme-machine, et
- la restitution ultérieure (126, 130) de ce message enregistré sur le combiné du résident ou par l'intermédiaire de l'interface homme-machine du portier électrique en réponse à une commande du résident.

8. Procédé selon la revendication 7, dans lequel le procédé comprend les étapes suivantes en réponse au passage d'une clé de ce résident à proximité d'une centrale d'accès apte à lire des informations enregistrées dans la clé et à les comparer à des paramètres d'accès préenregistrés pour autoriser et, en alternance, interdire le déverrouillage d'une porte d'entrée de la résidence :
- le portier électrique identifie le résident à partir des information contenues dans sa clé, et
- le portier électrique présente automatiquement (128) une proposition de restitution du message enregistré pour ce résident par l'intermédiaire de l'interface homme-machine du portier électrique.

9. Procédé selon l'une quelconque des revendications précédentes, dans lequel, dès que le combiné a pris la ligne et uniquement à partir de ce moment là, le procédé comporte l'échange d'images et de sons, dans les deux sens, par l'intermédiaire du réseau public, pour permettre la communication par visioconférence entre le portier électrique et le combiné appelé.

10. Support (52) d'enregistrement d'informations, **caractérisé en ce qu'**il comprend des instructions pour la mise en oeuvre d'un procédé d'interphonie conforme à l'une quelconque des revendications précédentes, lorsque ces instructions sont exécutées par un calculateur électronique.

11. Portier électrique d'une résidence comprenant :
- une interface homme-machine (40) permettant à un visiteur de sélectionner l'un quelconque des résidents de la résidence et de communiquer avec le résident sélectionné par visioconférence, et
- un émetteur/récepteur (42) relié à un réseau public de télécommunication, cet émetteur/récepteur étant apte à appeler un combiné du résident sélectionné et à établir la visioconférence par l'intermédiaire du réseau public,
**caractérisé en ce que** ce portier électrique comprend des moyens (50):
- de commande de l'interface homme-machine (40) de manière à générer des sons tant que le combiné n'a pas pris la ligne,
- de commande de l'interface homme-machine (40), en réponse à la prise de ligne par le combiné du résident, de manière à générer les mêmes sons que ceux habituellement générés tant que le combiné n'a pas pris la ligne pour inhiber la présentation par l'intermédiaire de l'interface homme-machine de toute information permettant au visiteur de savoir que le résident sélectionné a pris la ligne tout en permettant, en même temps, la transmission, par l'intermédiaire du réseau public, d'images du visiteur ayant sélectionné ce résident et l'affichage de ces images sur le combiné du résident, et
- d'arrêt de l'inhibition et de déclenchement de la visioconférence entre le visiteur et le résident par l'intermédiaire du réseau public en réponse à une commande d'activation de la visioconférence transmise par le combiné du résident.

12. Portier électrique d'une résidence comprenant :
- une interface homme-machine (40) permettant à un visiteur de sélectionner l'un quelconque des résidents de la résidence et de communiquer avec le résident sélectionné par visioconférence, et
- un émetteur/récepteur (42) relié à un réseau public de télécommunication, cet émetteur/récepteur étant apte à appeler un combiné du résident sélectionné et à établir la visioconférence par l'intermédiaire du réseau public,
**caractérisé en ce que** ce portier électrique comprend des moyens (50):
- de commande de l'interface homme-machine (40) de manière à générer des images tant que le combiné n'a pas pris la ligne,
- de commande de l'interface homme-machine (40), en réponse à la prise de ligne par le combiné du résident, de manière à générer les mêmes images que celles habituellement générées tant que le combiné n'a pas pris la ligne pour inhiber la présentation par l'intermédiaire de l'interface homme-machine de toute information permettant au visiteur de savoir que le résident sélectionné a pris la ligne tout en permettant, en même temps, la transmission, par l'intermédiaire du réseau public, d'images du visiteur ayant sélectionné ce résident et l'affichage de ces images sur le combiné du résident, et
- d'arrêt de l'inhibition et de déclenchement de la visioconférence entre le visiteur et le résident par l'intermédiaire du réseau public en réponse à une commande d'activation de la visioconférence transmise par le combiné du résident.

13. Portier selon la revendication 11 ou 12, dans lequel l'émetteur/récepteur (42) est un émetteur/récepteur UMTS (Universal Mobile Telecommunication System).

## Patentansprüche

1. Sprechanlagenverfahren eines Wohnhauses, das ausgestattet ist:
- mit mindestens einem elektrischen Türschloss, das eine Mensch-Maschine-Schnittstelle aufweist, die es einem Besucher erlaubt, einen beliebigen der Bewohner des Wohnhauses auszuwählen und mit dem ausgewählten Bewohner per Videokonferenz zu kommunizieren, und
- mit einem Sender/Empfänger, der mit einem öffentlichen Telekommunikationsnetz verbunden ist, wobei dieser Sender/Empfänger in der Lage ist, einen Handapparat des ausgewählten Bewohners anzurufen und die Videokonferenz über das öffentliche Netz aufzubauen,
wobei dieses Verfahren in Reaktion auf die Auswahl des beliebigen der Bewohner des Wohnhauses mithilfe der Mensch-Maschine-Schnittstelle durch einen Besucher Folgendes umfasst:
- das Anrufen (94) des Handapparats des Bewohners, der über das öffentliche Netz ausgewählt wurde,
**dadurch gekennzeichnet, dass**:
das Verfahren den folgenden Schritt umfasst: solange der Handapparat die Leitung nicht belegt hat, erzeugt die Mensch-Maschine-Schnittstelle Töne, und
das Verfahren die folgenden Schritte in Reaktion auf die Leitungsbelegung durch den Handapparat des Bewohners umfasst:
- die Mensch-Maschine-Schnittstelle erzeugt dieselben Töne wie diejenigen, die üblicherweise erzeugt werden, solange der Handapparat die Leitung nicht belegt hat und hemmt (100) die Darstellung mittels der Mensch-Maschine-Schnittstelle aller Informationen, die es dem Besucher erlauben, zu erfahren, dass der ausgewählte Bewohner die Leitung belegt hat, und gleichzeitig
- übermitteln das mindestens eine elektrische Türschloss und der Sender/Empfänger über das öffentliche Netz Bilder des Besuchers, der diesen Bewohner ausgewählt hat, und der Handapparat des Bewohners zeigt diese Bilder an, dann
das Verfahren die folgenden Schritte in Reaktion auf einen Befehl zur Aktivierung der Videokonferenz umfasst, der durch den Handapparat des Bewohners übermittelt wird:
- die Mensch-Maschine-Schnittstelle stoppt (104) das Hemmen der Darstellung mittels der Mensch-Maschine-Schnittstelle aller Informationen, die es dem Besucher erlauben, zu erfahren, dass der ausgewählte Bewohner die Leitung belegt hat, und
- der Sender/Empfänger baut die Videokonferenz zwischen dem Besucher und dem Bewohner über das öffentliche Netz auf.

2. Sprechanlagenverfahren eines Wohnhauses, das ausgestattet ist:
- mit mindestens einem elektrischen Türschloss, das eine Mensch-Maschine-Schnittstelle aufweist, die es einem Besucher erlaubt, einen beliebigen der Bewohner des Wohnhauses auszuwählen und mit dem ausgewählten Bewohner per Videokonferenz zu kommunizieren, und
- mit einem Sender/Empfänger, der mit einem öffentlichen Telekommunikationsnetz verbunden ist, wobei dieser Sender/Empfänger in der Lage ist, einen Handapparat des ausgewählten Bewohners anzurufen und die Videokonferenz über das öffentliche Netz aufzubauen,
wobei dieses Verfahren in Reaktion auf die Auswahl des beliebigen der Bewohner des Wohnhauses mithilfe der Mensch-Maschine-Schnittstelle durch einen Besucher Folgendes umfasst:
- das Anrufen (94) des Handapparats des Bewohners, der über das öffentliche Netz ausgewählt wurde,
**dadurch gekennzeichnet, dass**:
das Verfahren den folgenden Schritt umfasst: solange der Handapparat die Leitung nicht belegt hat, erzeugt die Mensch-Maschine-Schnittstelle Bilder, und
das Verfahren die folgenden Schritte in Reaktion auf die Leitungsbelegung durch den Handapparat des Bewohners umfasst:
- die Mensch-Maschine-Schnittstelle erzeugt dieselben Bilder wie diejenigen, die üblicherweise erzeugt werden, solange der Handapparat die Leitung nicht belegt hat und hemmt (100) die Darstellung mittels der Mensch-Maschine-Schnittstelle aller Informationen, die es dem Besucher erlauben, zu erfahren, dass der ausgewählte Bewohner die Leitung belegt hat, und gleichzeitig
- übermitteln das mindestens eine elektrische Türschloss und der Sender/Empfänger über das öffentliche Netz Bilder des Besuchers, der diesen Bewohner ausgewählt hat, und der Handapparat des Bewohners zeigt diese Bilder an, dann
das Verfahren die folgenden Schritte in Reaktion auf einen Befehl zur Aktivierung der Videokonferenz umfasst, der durch den Handapparat des Bewohners übermittelt wird:
- die Mensch-Maschine-Schnittstelle stoppt (104) das Hemmen der Darstellung mittels der Mensch-Maschine-Schnittstelle aller Informationen, die es dem Besucher erlauben, zu erfahren, dass der ausgewählte Bewohner die Leitung belegt hat, und
- der Sender/Empfänger baut die Videokonferenz zwischen dem Besucher und dem Bewohner über das öffentliche Netz auf.

3. Verfahren nach Anspruch 1 oder 2, wobei das Verfahren Folgendes umfasst:
- das Übermitteln (98) einer Darstellungsnachricht des anrufenden elektrischen Türschlosses, wobei diese Nachricht eine Kennung des anrufenden elektrischen Türschlosses, die in der Lage ist, dieses Türschloss unter mehreren elektrischen Türschlössern zu identifizieren, die denselben Handapparat des Bewohners anrufen können, und/oder mindestens eine Kennung einer Taste des Handapparats, die, wenn sie aktiviert ist, die Entriegelung einer Eingangstür des Wohnhauses auslöst, die dieser Taste zugeordnet ist, umfasst und
- das Darstellen (98) dieser Darstellungsnachricht durch den Handapparat des ausgewählten Bewohners, um es dem Bewohner zu erlauben, das elektrische Türschloss, das anruft, und/oder die Taste seines Handapparats zu identifizieren, die zu aktivieren ist, um die Entriegelung der Eingangstür, die dieser Taste zugeordnet ist, auszulösen.

4. Verfahren nach einem der vorhergehenden Ansprüche, wobei das Verfahren Folgendes umfasst:
- das Übermitteln (110) eines Befehls zur Entriegelung einer Eingangstür des Wohnhauses durch den Handapparat des ausgewählten Bewohners und über das öffentliche Netz, und
- in Reaktion auf die Ausführung des Entriegelungsbefehls durch das elektrische Türschloss, das Übermitteln (112) einer Ausführungsbestätigung des Entriegelungsbefehls an den Handapparat des ausgewählten Bewohners und das Darstellen dieser durch diesen Handapparat.

5. Verfahren nach einem der vorhergehenden Ansprüche, wobei das Verfahren Folgendes umfasst:
- das Erfassen einer Audio- und/oder visuellen Nachricht eines Besuchers durch das elektrische Türschloss,
- das Auswählen (106), in Abhängigkeit von dem Bewohner, der durch die Mensch-Maschine-Schnittstelle ausgewählt wurde, eines Formats, das eigens für den Handapparat des ausgewählten Bewohners angepasst ist, wobei dieses Format von anderen Handapparaten, die von demselben elektrischen Türschloss angerufen werden können, nicht lesbar ist, und
- das Übertragen (106) der erfassten Audio- und/oder visuellen Nachricht in das ausgewählte Format und das Übermitteln der übertragenen Nachricht zu dem ausgewählten Handapparat hin.

6. Verfahren nach Anspruch 5, wobei das Verfahren das Übertragen (106) der erfassten Audio- und/oder visuellen Nachricht in ein Format, das eigens für den Handapparat eines schwerhörigen Bewohners angepasst ist, umfasst, wobei sich dieses Format von dem Format unterscheidet, das für dieselbe Nachricht ausgewählt worden wäre, wenn ein gut hörender Bewohner ausgewählt worden wäre.

7. Verfahren nach einem der vorhergehenden Ansprüche, wobei das Verfahren Folgendes umfasst:
- das Erfassen (120), bei Nichtvorhandensein von Kommunikation mit dem Handapparat des ausgewählten Bewohners, einer alphanumerischen und/oder Audionachricht, die von einem Besucher erstellt wurde,
- das Aufzeichnen (120) dieser erfassten Nachricht, die einer Kennung des Bewohners zugeordnet ist, der von diesem Besucher mithilfe der Mensch-Maschine-Schnittstelle ausgewählt wurde, und
- das spätere Wiedergeben (126, 130) dieser aufgezeichneten Nachricht auf dem Handapparat des Bewohners oder über die Mensch-Maschine-Schnittstelle des elektrischen Türschlosses in Reaktion auf einen Befehl des Bewohners.

8. Verfahren nach Anspruch 7, wobei das Verfahren die folgenden Schritte in Reaktion auf die Annäherung eines Schlüssels dieses Bewohners an eine Zutrittszentrale umfasst, die in der Lage ist, Informationen zu lesen, die in dem Schlüssel gespeichert sind, und sie mit vorab gespeicherten Zutrittsparametern zu vergleichen, um die Entriegelung einer Eingangstür des Wohnhauses zuzulassen und, im Wechsel, zu unterbinden:
- das elektrische Türschloss identifiziert den Bewohner anhand der Informationen, die in seinem Schlüssel enthalten sind, und
- das elektrische Türschloss stellt automatisch (128) einen Vorschlag zur Wiedergabe der Nachricht dar, die für diesen Bewohner über die Mensch-Maschine-Schnittstelle des elektrischen Türschlosses aufgezeichnet wurde.

9. Verfahren nach einem der vorhergehenden Ansprüche, wobei, sobald der Handapparat die Leitung belegt hat, und nur ab diesem Zeitpunkt, das Verfahren den Austausch von Bildern und Tönen in beiden Richtungen über das öffentliche Netz, um die Kommunikation per Videokonferenz zwischen dem elektrischen Türschloss und dem angerufenen Handapparat zu ermöglichen, umfasst.

10. Träger (52) zum Aufzeichnen von Informationen, **dadurch gekennzeichnet, dass** er Anweisungen für die Einrichtung eines Sprechanlagenverfahrens enthält, das einem der vorhergehenden Ansprüche entspricht, wenn diese Anweisungen von einem elektronischen Rechner ausgeführt werden.

11. Elektrisches Türschloss eines Wohnhauses, umfassend:
- eine Mensch-Maschine-Schnittstelle (40), die es einem Besucher erlaubt, einen beliebigen der Bewohner des Wohnhauses auszuwählen und mit dem ausgewählten Bewohner per Videokonferenz zu kommunizieren, und
- einen Sender/Empfänger (42), der mit einem öffentlichen Telekommunikationsnetz verbunden ist, wobei dieser Sender/Empfänger in der Lage ist, einen Handapparat des ausgewählten Bewohners anzurufen und die Videokonferenz über das öffentliche Netz aufzubauen,
**dadurch gekennzeichnet, dass** dieses elektrische Türschloss Mittel (50) umfasst:
- zum Steuern der Mensch-Maschine-Schnittstelle (40), um Töne zu erzeugen, solange der Handapparat die Leitung nicht belegt hat,
- zum Steuern der Mensch-Maschine-Schnittstelle (40), in Reaktion auf die Leitungsbelegung durch den Handapparat des Bewohners, um dieselben Töne wie diejenigen zu erzeugen, die üblicherweise erzeugt werden, solange der Handapparat die Leitung nicht belegt hat, um die Darstellung mittels der Mensch-Maschine-Schnittstelle aller Informationen zu hemmen, die es dem Besucher erlauben, zu erfahren, dass der ausgewählte Bewohner die Leitung belegt hat, und dabei gleichzeitig die Übermittlung von Bildern des Besuchers, der diesen Bewohner ausgewählt hat, über das öffentliche Netz, und die Anzeige dieser Bilder auf dem Handapparat des Bewohners zu erlauben, und
- zum Stoppen des Hemmens und zum Auslösen der Videokonferenz zwischen dem Besucher und dem Bewohner über das öffentliche Netz in Reaktion auf einen Befehl zur Aktivierung der Videokonferenz, der durch den Handapparat des Bewohners übermittelt wird.

12. Elektrisches Türschloss eines Wohnhauses, umfassend:
- eine Mensch-Maschine-Schnittstelle (40), die es einem Besucher erlaubt, einen beliebigen der Bewohner des Wohnhauses auszuwählen und mit dem ausgewählten Bewohner per Videokonferenz zu kommunizieren, und
- einen Sender/Empfänger (42), der mit einem öffentlichen Telekommunikationsnetz verbunden ist, wobei dieser Sender/Empfänger in der Lage ist, einen Handapparat des ausgewählten Bewohners anzurufen und die Videokonferenz über das öffentliche Netz aufzubauen,
**dadurch gekennzeichnet, dass** dieses elektrische Türschloss Mittel (50) umfasst:
- zum Steuern der Mensch-Maschine-Schnittstelle (40), um Bilder zu erzeugen, solange der Handapparat die Leitung nicht belegt hat,
- zum Steuern der Mensch-Maschine-Schnittstelle (40), in Reaktion auf die Leitungsbelegung durch den Handapparat des Bewohners, um dieselben Bilder wie diejenigen zu erzeugen, die üblicherweise erzeugt werden, solange der Handapparat die Leitung nicht belegt hat, um die Darstellung mittels der Mensch-Maschine-Schnittstelle aller Informationen zu hemmen, die es dem Besucher erlauben, zu erfahren, dass der ausgewählte Bewohner die Leitung belegt hat, und dabei gleichzeitig die Übermittlung von Bildern des Besuchers, der diesen Bewohner ausgewählt hat, über das öffentliche Netz, und die Anzeige dieser Bilder auf dem Handapparat des Bewohners zu erlauben, und
- zum Stoppen des Hemmens und zum Auslösen der Videokonferenz zwischen dem Besucher und dem Bewohner über das öffentliche Netz in Reaktion auf einen Befehl zur Aktivierung der Videokonferenz, der durch den Handapparat des Bewohners übermittelt wird.

13. Türschloss nach Anspruch 11 oder 12, wobei der Sender/Empfänger (42) ein UMTS(Universal Mobile Telecommunication System)Sender/Empfänger ist.

## Claims

1. Interphone method for a dwelling equipped:
- with at least one electric intercom including a human-machine interface enabling a visitor to select any of the residents of the dwelling and to communicate with the selected resident through videoconferencing, and
- with a transceiver linked to a public telecommunications network, this transceiver being able to call a receiver of the selected resident and to establish videoconferencing by way of the public network,
this method including, in response to the selection, by a visitor, of any of the residents of the dwelling using the human-machine interface:
- calling (94) the receiver of the selected resident by way of the public network,
**characterized in that**:
• the method comprises the following step: while the receiver is not engaging the line, the human-machine interface generates sounds, and
• the method comprises the following steps in response to the line being engaged by the receiver of the resident:
- the human-machine interface generates the same sounds as those usually generated while the receiver is not engaging the line, and prevents (100) the human-machine interface from presenting any information enabling the visitor to know that the selected resident has engaged the line, and, at the same time,
- said at least one electric intercom and the transceiver transmit, by way of the public network, images of the visitor who selected this resident and the receiver of the resident displays these images, then
• the method comprises the following steps in response to an order to activate videoconferencing, transmitted by the receiver of the resident:
- the human-machine interface ceases (104) to prevent the human-machine interface from presenting any information enabling the visitor to know that the selected resident has engaged the line, and
- the transceiver establishes videoconferencing between the visitor and the resident by way of the public network.

2. Interphone method for a dwelling equipped:
- with at least one electric intercom including a human-machine interface enabling a visitor to select any of the residents of the dwelling and to communicate with the selected resident through videoconferencing, and
- with a transceiver linked to a public telecommunications network, this transceiver being able to call a receiver of the selected resident and to establish videoconferencing by way of the public network,
this method including, in response to the selection, by a visitor, of any of the residents of the dwelling using the human-machine interface:
- calling (94) the receiver of the selected resident by way of the public network,
**characterized in that**:
• the method comprises the following step: while the receiver is not engaging the line, the human-machine interface generates images, and
• the method comprises the following steps in response to the line being engaged by the receiver of the resident:
- the human-machine interface generates the same images as those usually generated while the receiver is not engaging the line, and prevents (100) the human-machine interface from presenting any information enabling the visitor to know that the selected resident has engaged the line, and, at the same time,
- said at least one electric intercom and the transceiver transmit, by way of the public network, images of the visitor who selected this resident and the receiver of the resident displays these images, then
• the method comprises the following steps in response to an order to activate videoconferencing, transmitted by the receiver of the resident:
- the human-machine interface ceases (104) to prevent the human-machine interface from presenting any information enabling the visitor to know that the selected resident has engaged the line, and
- the transceiver establishes videoconferencing between the visitor and the resident by way of the public network.

3. Method according to Claim 1 or 2, wherein the method comprises:
- transmission (98) of a message presenting the electric intercom that is calling, this message comprising an identifier of the electric intercom that is calling that is suitable for identifying this intercom from a plurality of electric intercoms that could potentially call the same receiver of the resident and/or at least one identifier of a button of the receiver that, when it is activated, triggers the unlocking of an entrance door of the dwelling that is associated with this button, and
- presentation (98) of this presentation message by the receiver of the selected resident, so as to enable the resident to identify the electric intercom that is calling and/or the button of his receiver to be activated in order to trigger the unlocking of the entrance door associated with this button.

4. Method according to any one of the preceding claims, wherein the method comprises:
- transmission (110), by the receiver of the selected resident and via the public network, of an order to unlock an entrance door of the dwelling, and
- in response to the execution of the unlocking order by the electric intercom, transmission (112), to the receiver of the selected resident and presentation, by this receiver, of a confirmation of the execution of the unlocking order.

5. Method according to any one of the preceding claims, wherein the method comprises:
- acquisition of an audio and/or visual message from a visitor by the electric intercom,
- selection (106), depending on the resident selected by way of the human-machine interface, of a format specially adapted for the receiver of the selected resident, this format not being able to be read by other receivers that could potentially be called by the same electric intercom, and
- transcription (106) of the audio and/or visual message acquired in the selected format and transmission of the transcribed message to the selected receiver.

6. Method according to Claim 5, wherein the method comprises transcription (106) of the acquired audio and/or visual message in a format specially adapted for the receiver of a resident with impaired hearing, this format differing from the format that would have been selected for the same message if a resident with unimpaired hearing had been selected.

7. Method according to any one of the preceding claims, wherein the method comprises:
- acquisition (120), in the absence of communication with the receiver of the selected resident, of an alphanumeric and/or audio message produced by a visitor,
- recording (120) of this acquired message associated with an identifier of the resident selected by this visitor using the human-machine interface, and
- subsequent recovery (126, 130) of this recorded message on the receiver of the resident or by way of the human-machine interface of the electric intercom in response to an order from the resident.

8. Method according to Claim 7, wherein the method comprises the following steps in response to the passing of a key of this resident into the vicinity of an access terminal able to read information stored in the key and to compare said information with prerecorded access parameters in order to authorize and, alternately, prevent the unlocking of an entrance door of the dwelling:
- the electric intercom identifies the resident on the basis of the information contained in his key, and
- the electric intercom automatically presents (128) an option to recover the message recorded for this resident by way of the human-machine interface of the electric intercom.

9. Method according to any one of the preceding claims, wherein, as soon as the receiver engages the line, and only from this moment onwards, the method includes exchanging images and sounds, in both directions, by way of the public network, so as to enable communication through videoconferencing between the electric intercom and the receiver that is called.

10. Medium (52) for recording information, **characterized in that** it comprises instructions for implementing an interphone method according to any one of the preceding claims, when these instructions are executed by an electronic computer.

11. Electric intercom for a dwelling, comprising:
- a human-machine interface (40) enabling a visitor to select any of the residents of the dwelling and to communicate with the selected resident through videoconferencing, and
- a transceiver (42) linked to a public telecommunications network, this transceiver being able to call a receiver of the selected resident and to establish videoconferencing by way of the public network,
**characterized in that** this electric intercom comprises means (50):
- for controlling the human-machine interface (40) so as to generate sounds while the receiver is not engaging the line,
- for controlling the human-machine interface (40), in response to the line being engaged by the receiver of the resident, so as to generate the same sounds as those usually generated while the receiver is not engaging the line in order to prevent the human-machine interface from presenting any information enabling the visitor to know that the selected resident has engaged the line, while enabling, at the same time, the transmission, by way of the public network, of images of the visitor who selected this resident and the displaying of these images on the receiver of the resident, and
- for ceasing the prevention and for triggering videoconferencing between the visitor and the resident by way of the public network in response to an order to activate videoconferencing that is transmitted by the receiver of the resident.

12. Electric intercom for a dwelling, comprising:
- a human-machine interface (40) enabling a visitor to select any of the residents of the dwelling and to communicate with the selected resident through videoconferencing, and
- a transceiver (42) linked to a public telecommunications network, this transceiver being able to call a receiver of the selected resident and to establish videoconferencing by way of the public network,
**characterized in that** this electric intercom comprises means (50):
- for controlling the human-machine interface (40) so as to generate images while the receiver is not engaging the line,
- for controlling the human-machine interface (40), in response to the line being engaged by the receiver of the resident, so as to generate the same images as those usually generated while the receiver is not engaging the line in order to prevent the human-machine interface from presenting any information enabling the visitor to know that the selected resident has engaged the line, while enabling, at the same time, the transmission, by way of the public network, of images of the visitor who selected this resident and the displaying of these images on the receiver of the resident, and
- for ceasing the prevention and for triggering videoconferencing between the visitor and the resident by way of the public network in response to an order to activate videoconferencing that is transmitted by the receiver of the resident.

13. Intercom according to Claim 11 or 12, wherein the transceiver (42) is a UMTS (Universal Mobile Telecommunications System) transceiver.
